(19) **Europäisches Patentamt / European Patent Office / Office européen des brevets**

(11) **EP 3 214 775 B1**

(12) **EUROPEAN PATENT SPECIFICATION**

(45) Date of publication and mention
of the grant of the patent:
**12.08.2020 Bulletin 2020/33**

(51) Int Cl.:
*H04J 3/00* (2006.01)     *H04B 1/16* (2006.01)
*H04J 11/00* (2006.01)

(21) Application number: **15856089.6**

(22) Date of filing: **19.10.2015**

(86) International application number:
**PCT/JP2015/079441**

(87) International publication number:
**WO 2016/067953 (06.05.2016 Gazette 2016/18)**

(54) **RECEIVING DEVICE AND METHOD**

EMPFANGSVORRICHTUNG UND -VERFAHREN

DISPOSITIF ET PROCÉDÉ DE RÉCEPTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.10.2014 JP 2014221034**

(43) Date of publication of application:
**06.09.2017 Bulletin 2017/36**

(73) Proprietor: **Sony Corporation
Tokyo 108-0075 (JP)**

(72) Inventors:
• **KAMATA Hiroyuki
Tokyo 108-0075 (JP)**
• **KAWAUCHI Hidetoshi
Tokyo 108-0075 (JP)**
• **YOKOSHIMA Hideki
Tokyo 108-0075 (JP)**

(74) Representative: **MFG Patentanwälte
Meyer-Wildhagen Meggle-Freund
Gerhard PartG mbB
Amalienstraße 62
80799 München (DE)**

(56) References cited:
**EP-A1- 2 285 057**     **EP-A1- 2 680 522**
**WO-A1-94/27375**     **JP-A- 2004 524 739**
**JP-A- 2011 041 086**     **JP-A- 2014 096 767**
**US-A1- 2007 248 034**     **US-B1- 7 003 273**

• **JOKELA T ET AL: "Robustness analysis of
physical layer signaling transmission in
DVB-T2", BROADBAND MULTIMEDIA SYSTEMS
AND BROADCASTING, 2009. BMSB '09. IEEE
INTERNATIONAL SYMPOSIUM ON, IEEE,
PISCATAWAY, NJ, USA, 13 May 2009
(2009-05-13), pages 1-5, XP031480140, ISBN:
978-1-4244-2590-7**

**Description**

TECHNICAL FIELD

The present disclosure relates to a reception device and a reception method. In particular, the disclosure relates to a reception device and a reception method that achieve reduction in electric power consumption while data separated in a time direction is partially received.

BACKGROUND ART

According to the definition in a digital video broadcasting-terrestrial (DVB-T) 2 standard, data is transmitted in units of transmission frames referred to as T2 frames serving as desired signals (refer to Non-patent Document 1). Additionally, there is a mode in the DVB-T2 in which time-division multiplexing is applied to a signal called a future extension frame (FEF) having a structure different from that of the aforementioned T2 frame, on top of the T2 frame when transmitted.

Typically, when receiving a signal sent after being constructed by multiplexing signals according to a plurality of techniques having structures different from one another, reception devices of the respective techniques independently detect respective signals to receive. Similarly in the DVB-T2, for example, a reception device configured to receive the T2 frame and a reception device configured to receive the FEF independently detect the respective signals to receive.

Specifically, P1 and P2 symbols in the T2 frame include transmission information about a signal, including an FFTSIZE, a data length, a guard interval ratio, the number of times of repetitions of the T2 frame, whether the FEF is present, an FEF part length, and so on with respect to the desired signal. Accordingly, a receiving side can recognize the presence of the FEF part and duration thereof by acquiring these items of the information.

Incidentally, a technology has been known in which one of thirteen segments alone is received during the reception of one segment data in an ISDB-T to reduce electric power consumption of a reception device that receives this data.

Patent Document 1 discloses a signal processing apparatus including a first detection block for detecting a first preamble signal from a multiplexed plurality of different signals having the first preamble signal, a second detection block for detecting a second preamble signal following the first if information in the first preamble signal identifies a first signal, a duration detection block for determining a duration of a second signal in said multiplexed signals based on information in said second preamble signal, and a duration information output block for outputting information about said duration of said second signal to a demodulation block for demodulating one of said signal in said multiplexed plurality of signals.

CITATION LIST

NON-PATENT DOCUMENT

Non-patent Document 1: ETSI EN 302 755 V1.3.1, Frame structure channel coding and modulation for a second generation digital terrestrial television broadcasting system (DVB-T2) 2012, 04, the home page of the DVB, [searched on October 9, 2014], the Internet <URL: http://www.dvb.org/technology/standards/dvb-t2>

PATENT DOCUMENT

Patent Document 1: EP 2285057 A1

SUMMARY OF THE INVENTION

PROBLEMS TO BE SOLVED BY THE INVENTION

However, the segment in the ISDB-T is separated in a frequency direction and thus needs to be received continuously in the time direction. For this reason, this technology has not contributed to reduction in electric power consumption when the FEF in the DVB-T2 is present.

Accordingly, it is required to achieve low electric power consumption in a reception device while data separated in the time direction as in the DVB-T2 is partially received.

The present disclosure has been made by taking such a situation into account and an object thereof is to achieve lower electric power necessary while data separated in a time direction is partially received.

SOLUTIONS TO PROBLEMS

According to a first aspect the invention provides a reception device in accordance with claim 1. According to a second aspect the invention provides a reception method in accordance with claim 12. Further aspects of the invention are set forth in the dependent claims, the drawings and the following description of embodiments. A reception device according to an aspect of the present disclosure includes an intermittent action block that works solely during a first frame part when receiving data obtained by time-division multiplexing of the first frame part and a second frame part, which second frame has a structure different from a structure of the first frame, and a constant action block that constantly monitors the first frame part and the second frame part and controls an action of the intermittent action block.

The intermittent action block includes an information acquisition unit configured to acquire transmission information regarding the first frame part and the second frame part and is able to work solely during the first frame part after the information acquisition unit acquires the transmission information regarding the first frame part and the second frame part.

The first frame part is a T2 frame part and the second frame part is an FEF part.

The constant action block is able to carry out control of stopping and restarting the action of the intermittent action block in accordance with a temporal flow of the data.

The intermittent action block is able to include an RF circuit and an A/D converter.

The constant action block is able to stop and restart actions of the RF circuit and the A/D converter in phases.

The constant action block is able to carry out control of stopping the actions of the RF circuit and the A/D converter in the order of an oscillation circuit, the A/D converter, a variable gain amplifier, a channel selection filter, a distortion detector, a mixer, and a variable gain amplifier, which constitute the RF circuit and the A/D converter.

The constant action block is able to carry out control of restarting the actions of the RF circuit and the A/D converter in the order of a variable gain amplifier, a mixer, a distortion detector, a channel selection filter, a variable gain amplifier, the A/D converter, and an oscillation circuit, which constitute the RF circuit and the A/D converter.

A compensation unit can be further provided, which compensation unit compensates a change in a reception state due to temperature characteristics of the RF circuit and the A/D converter serving as analog circuits when the actions of the RF circuit and the A/D converter are restarted after being stopped, by using signals from the RF circuit and the A/D converter.

The compensation unit is a demodulator that corrects sampling frequency and down-conversion frequency errors due to a change in an oscillation frequency of an oscillation circuit included in the RF circuit and the A/D converter.

The demodulator is able to correct the sampling frequency and down-conversion frequency errors by using a pattern fixedly set.

The demodulator is able to record an error detection value for the sampling frequency and down-conversion frequency errors and make a correction on the basis of the error detection value recorded at an immediately previous time.

The demodulator is able to correct the sampling frequency and down-conversion frequency errors by enhancing an error tracking characteristic for a time period until the temperature characteristics become stable.

The demodulator is able to correct the sampling frequency and down-conversion frequency errors by achieving temperature stability earlier in such a manner as to restart the actions of the RF circuit and the A/D converter from a time point prior to a desired action start time thereof by an amount of time required to make the temperature stable.

The constant action block is able to carry out control of stopping the action of the intermittent action block through clock gating.

The constant action block is able to carry out control of stopping the action of the intermittent action block through power gating.

In a reception method according to an aspect of the present disclosure, an intermittent action block of a reception device works solely during a first frame part when receiving data obtained by time-division multiplexing of the first frame part and a second frame part, which second frame has a structure different from a structure of the first frame, and a constant action block of the reception device constantly monitors the first frame part and the second frame part and controls an action of the intermittent action block.

According to an aspect of the present disclosure, when receiving data obtained by the time-division multiplexing of the first frame part and the second frame part, which second frame has a structure different from a structure of the first frame, the intermittent action block works solely during the first frame part. Additionally, the constant action block of the reception device constantly monitors the first frame part and the second frame part and controls the action of the intermittent action block.

EFFECTS OF THE INVENTION

According to the present technology, data separated in the time direction can be partially received. In particular, according to the present technology, electric power consumption while data separated in the time direction is partially received can be reduced.

Note that the effects described in the present description merely serve as examples and the effects of the present technology are not limited to the effects described in the present description. There may be an additional effect as well.

BRIEF DESCRIPTION OF DRAWINGS

Fig. 1 is a diagram illustrating an exemplary configuration of a DVB-T2 signal containing FEFs.
Fig. 2 is a diagram illustrating an exemplary configuration of a T2 frame.
Fig. 3 is a diagram for explaining a frame length.
Fig. 4 is a diagram illustrating a relationship between an action of a reception device and electric power consumption.
Fig. 5 is a block diagram illustrating an exemplary configuration of a reception device to which the present technology is applied.
Fig. 6 is a block diagram illustrating examples of a constant action block and an intermittent action block in the reception device.
Fig. 7 is a block diagram illustrating other examples of the constant action block and the intermittent action block in the reception device.
Fig. 8 is a block diagram illustrating an exemplary configuration of an FEF part measurement unit.
Fig. 9 is a diagram for explaining a measurement method for an FEF part.
Fig. 10 is a flowchart for explaining reception processing.
Fig. 11 is a flowchart for explaining exemplary FEF part measurement processing.
Fig. 12 is a block diagram illustrating working blocks that are working in the reception device.
Fig. 13 is a block diagram illustrating stopping blocks that are stopped in the reception device.
Fig. 14 is a detailed block diagram of an RF circuit and an A/D circuit.
Fig. 15 is a diagram for explaining a case where a frequency error occurs due to changes in temperature.
Fig. 16 is a diagram for explaining a first method for handling a frequency error due to changes in temperature.
Fig. 17 is a diagram for explaining a second method for handling a frequency error due to changes in temperature.
Fig. 18 is a diagram for explaining a third method for handling a frequency error due to changes in temperature.
Fig. 19 is a diagram for explaining a fourth method for handling a frequency error due to changes in temperature.
Fig. 20 is a diagram illustrating an exemplary configuration of a computer.

MODE FOR CARRYING OUT THE INVENTION

Modes for carrying out the present disclosure (hereinafter, referred to as embodiments) will be described below. Note that the description will be given in the following order.

0. Overview
1. First Embodiment (Example of Reception Device according to Present Technology)
2. Second Embodiment (Example of Compensation Processing according to Present Technology)
3. Third Embodiment (Example of Computer)

<0. Overview>

According to the definition in a digital video broadcasting-terrestrial (DVB-T) 2 standard, data is transmitted in units of transmission frames referred to as T2 frames serving as desired signals. Additionally, there is a mode in the DVB-T2 in which time-division multiplexing is applied to a signal called a future extension frame (FEF) having a structure different from that of the aforementioned T2 frame, on top of the T2 frame when transmitted. For example, the desired signal desired by a user is input to a T2 frame part. In contrast to this, although it is still unknown for the time being what will be input to an FEF part, a signal of one segment data or the like will be input thereto in the future.

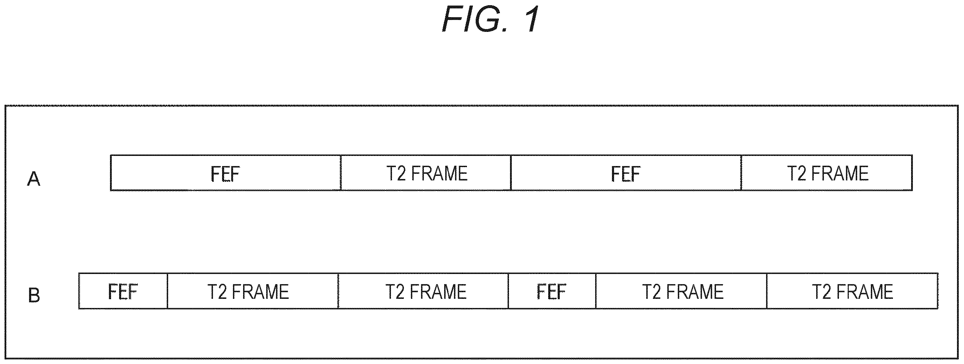

For example, A of Fig. 1 illustrates an example, as an exemplary configuration of the DVB-T2 signal containing the FEFs, where the FEF parts and the T2 frame parts are repeatedly constructed. In addition, B of Fig. 1 illustrates an example, as an exemplary configuration of the DVB-T2 signal containing the FEFs, where a set of the one FEF part followed by the two consecutive T2 frame parts is repeatedly constructed.

Typically, when receiving a signal sent after being constructed by multiplexing signals according to a plurality of techniques having structures different from one another, reception devices of the respective techniques independently detect respective signals to receive. Similarly in the DVB-T2, for example, a reception device configured to receive the T2 frame and a reception device configured to receive the FEF independently detect the respective signals to receive.

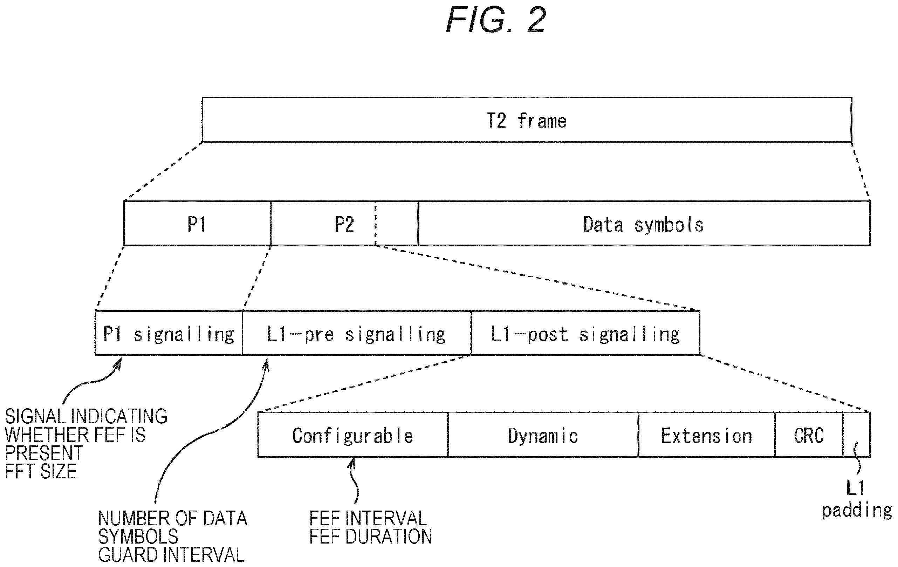

Specifically, as illustrated in Fig. 2, the T2 frame (T2 frame) is constituted by a P1 symbol, a P2 symbol, and data symbols (Date symbols) in this order from the top (left side).

The P1 symbol and the P2 symbol located at the top of the T2 frame include transmission information about the signal. For example, P1 signalling in the P1 symbol includes an FFT size and a signal indicating whether the FEF is present with respect to the T2 frame serving as the desired signal.

Meanwhile, the P2 symbol is configured so as to include L1-pre signalling and L1-post signalling. The L1-pre signalling includes the number of data symbols and a guard interval ratio in the configuration. The L1-post signalling is configured so as to include, for example, Configurable, Dynaminc, Extension, CRC, and L1-padding (padding). This Configurable includes an FEF interval and FEF duration.

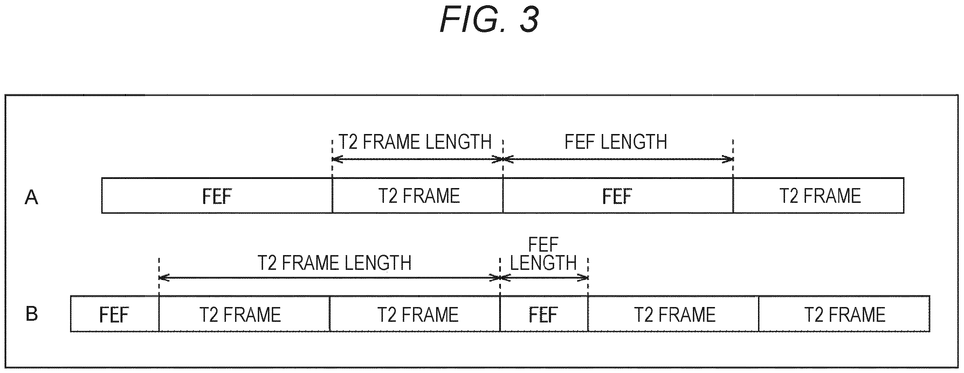

As illustrated in A of Fig. 3 and B of Fig. 3, a T2 frame length can be settled from the above-described transmission information about the signal as follows:

$$\text{T2 frame length} = \text{FEF interval} \times (\text{data count} \times \text{FFT size} \times \text{guard interval ratio} + \text{P1 length} + \text{P2 length})$$

P1 length = 2048 samples (fixed)
P2 length = uniquely determined by the FFT size

As described thus far, a receiver that receives the DVB-T2 signal containing the FEFs can recognize the presence of the FEF part and the duration thereof at a receiving side by acquiring these items of the information.

Here, when the T2 frame is a signal desired by the user (desired signal), a signal in such an FEF part does not need to be received because this signal is not the desired signal. By considering this, the present technology is configured to stop reception processing during this part.

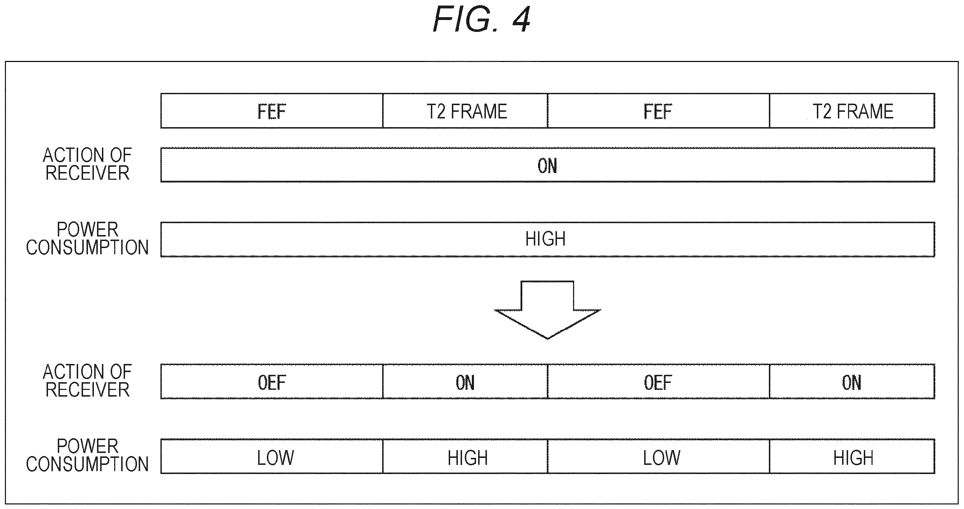

As illustrated on the upper side of Fig. 4, when data obtained by the time-division multiplexing of the T2 frame part and the FEF part is received, the action of the receiver that receives this data has been constantly turned on in the past, resulting in higher electric power consumption.

In contrast to this, as illustrated on the lower side of Fig. 4, the action of the receiver is configured to be turned off during the FEF part, while the action of the receiver is turned on solely during the T2 frame part. With this, although the electric power consumption during the T2 frame part does not change, the electric power consumption during the FEF part decreases. Consequently, the electric power consumption can be reduced, compared to a case where the action of the receiver is constantly turned on.

<1. Exemplary Reception Device according to Present Technology>

[Exemplary Configuration of Reception Device]

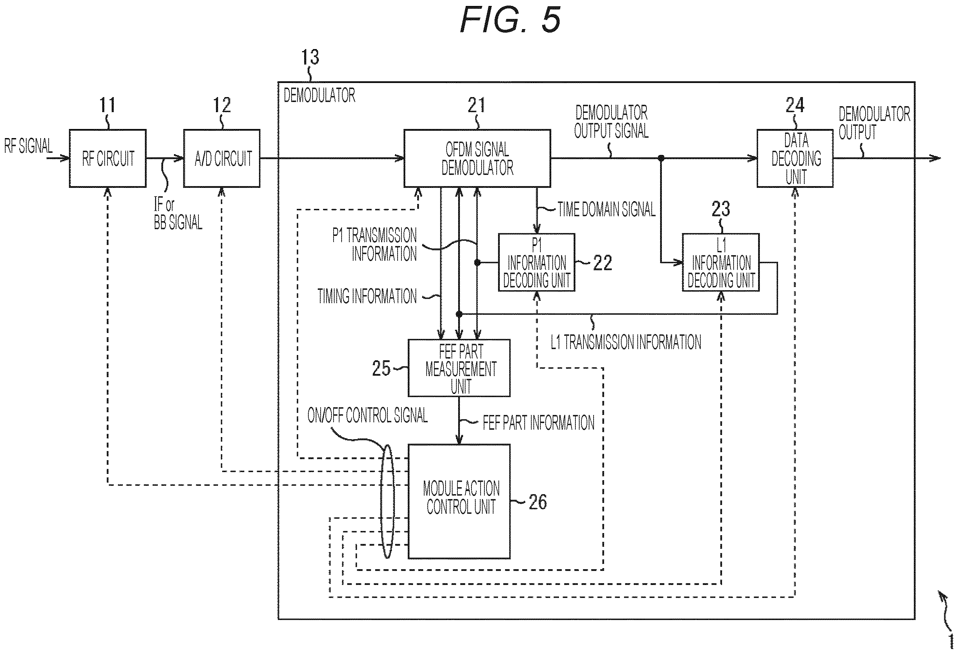

Fig. 5 is a block diagram illustrating an exemplary configuration of the reception device to which the present technology is applied. Data (signal) obtained by the time-division multiplexing of the T2 frame part and the FEF part in accordance with, for example, the DVB-T2 standard is transferred from a sender (not illustrated). This reception device receives the data obtained by the time-division multiplexing of the T2 frame part and the FEF part.

In the example in Fig. 5, the reception device 1 is configured so as to include an RF circuit 11, an analog to digital (A/D) circuit 12, and a demodulator 13.

The RF circuit 11 is constituted by, for example, a tuner. The RF circuit 11 receives an RF signal of the data obtained by the time-division multiplexing of the T2 frame part and the FEF part to carry out predetermined signal processing thereon and then generates an intermediate frequency (IF) signal or a baseband (BB) signal according to a system. The RF circuit 11 supplies the generated IF signal or BB signal to the A/D circuit 12.

The A/D circuit 12 converts analog data from the RF circuit 11, namely, the IF signal or BB signal to digital data and then outputs the converted digital data to the demodulator 13.

The demodulator 13 is configured so as to include an orthogonal frequency division multiplexing (OFDM) signal demodulator 21, a P1 information decoding unit 22, an L1 information decoding unit 23, a data decoding unit 24, an FEF part measurement unit 25, and a module action control unit 26.

The digital data from the A/D circuit 12 is input to the OFDM signal demodulator 21. The OFDM signal demodulator 21 carries out OFDM demodulation on the digital data to detect the position of P1 from the demodulated data and then supplies a time domain signal of P1 to the P1 information decoding unit 22.

Because the duration of P2 is uniquely defined from the FFT size in P1 transmission information supplied from the P1 information decoding unit 22, the OFDM signal demodulator 21 detects P2 from the demodulated data and then supplies a demodulator output signal for the position of P2 to the L1 information decoding unit 23. The OFDM signal demodulator 21 also outputs the demodulator output signal other than P1 and P2 to the data decoding unit 24 from among the demodulated data.

As described earlier with reference to A of Fig. 3 and B of Fig. 3, the T2 frame length and the FEF length can be known from the FFT size and the signal indicating whether the FEF is present, in the P1 transmission information supplied from the P1 information decoding unit 22, and the number of the data symbols and a guard interval in L1 transmission information supplied from the L1 information decoding unit 23, as well as the FEF interval and the FEF duration. With this, the OFDM signal demodulator 21 can find out the top of the frame and accordingly supplies timing information indicating the top of the frame to the FEF part measurement unit 25.

The P1 information decoding unit 22 decodes the time domain signal of P1 from the OFDM signal demodulator 21 and then acquires the P1 transmission information (the FFT size and the signal indicating whether the FEF is present with respect to the T2 frame, which are included in P1 signalling). The P1 information decoding unit 22 supplies the acquired P1 transmission information to the OFDM signal demodulator 21 and the FEF part measurement unit 25.

The L1 information decoding unit 23 decodes the demodulator output signal for the position of P2 from the OFDM signal demodulator 21 and then acquires the L1 transmission information (the number of the data symbols and the guard interval included in the L1-pre signalling and a signal indicating the FEF interval and the FEF duration, which is included in the L1-post signalling). The L1 information decoding unit 23 supplies the acquired L1 transmission information to the OFDM signal demodulator 21 and the FEF part measurement unit 25.

The data decoding unit 24 decodes the demodulator output signal other than P1 and P2, namely, the data symbol to output to a latter stage (not illustrated) as demodulator output.

The FEF part measurement unit 25 is a module of a constant action block and, on the basis of the timing information about the frame from the OFDM signal demodulator 21, the P1 transmission information from the P1 information decoding unit 22, and the L1 transmission information from the L1 information decoding unit 23, supplies, to the module action control unit 26, FEF part information indicating that the current frame is in the FEF part or in the T2 frame part.

The module action control unit 26 is a module of the constant action block and, on the basis of the FEF part information from the FEF part measurement unit 25, controls an intermittent action block that works intermittently to turn off (stop) and on (restart), as indicated by dotted line arrows. In addition, the order of stopping and restarting respective modules of the intermittent action block is controlled by the module action control unit 26 and, for example, the control is performed in accordance with a temporal flow of data. Specifically, it is possible to give a stop at a time point when processing of data is completed for the first time in the T2 frame part.

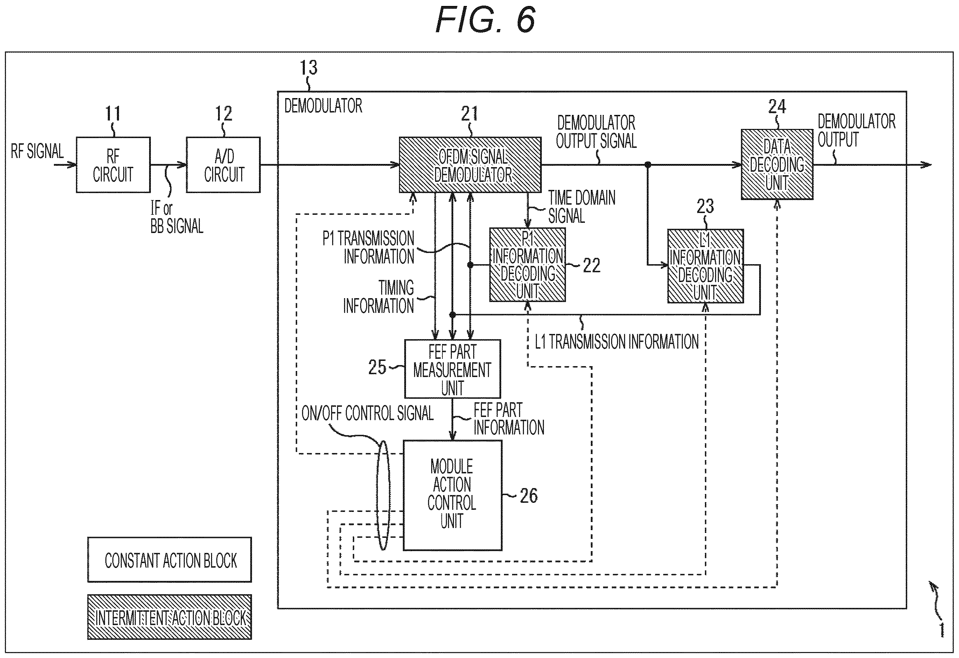

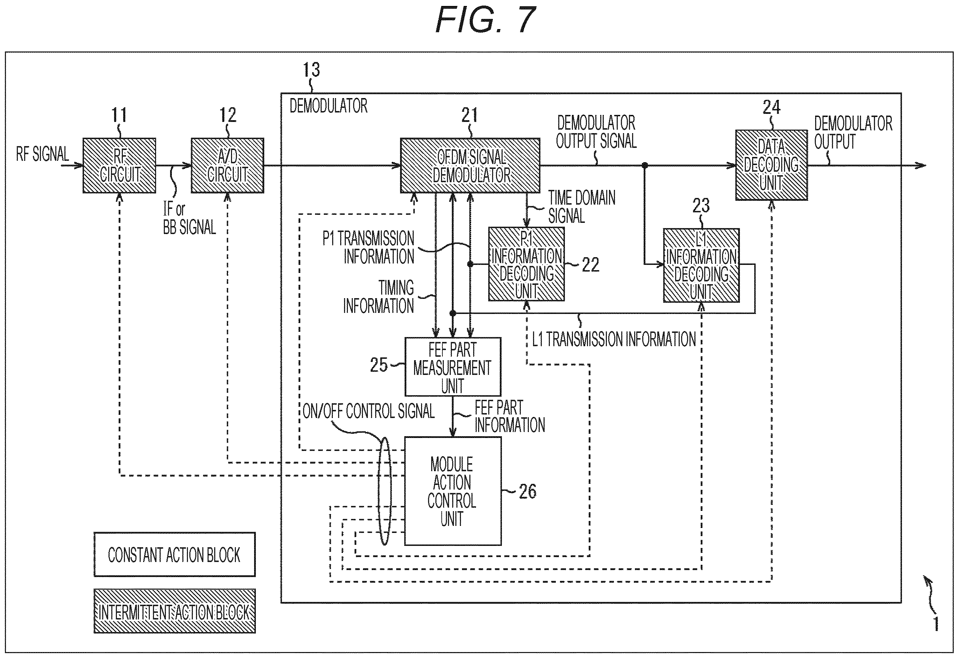

Here, respective modules of the intermittent action block are illustrated with hatching in the examples in Fig. 6 and Fig. 7. In the case of the example in Fig. 6, the intermittent action block is made up of the OFDM signal demodulator 21, the P1 information decoding unit 22, the L1 information decoding unit 23, and the data decoding unit 24 within the demodulator 13.

In contrast to this, in the case of the example in Fig. 7, not only the members within the demodulator 13 illustrated in Fig. 6 but also the RF circuit 11 and the A/D circuit 12 serving as analog circuits at the outside of the demodulator 13 are included in the configuration of the intermittent action block.

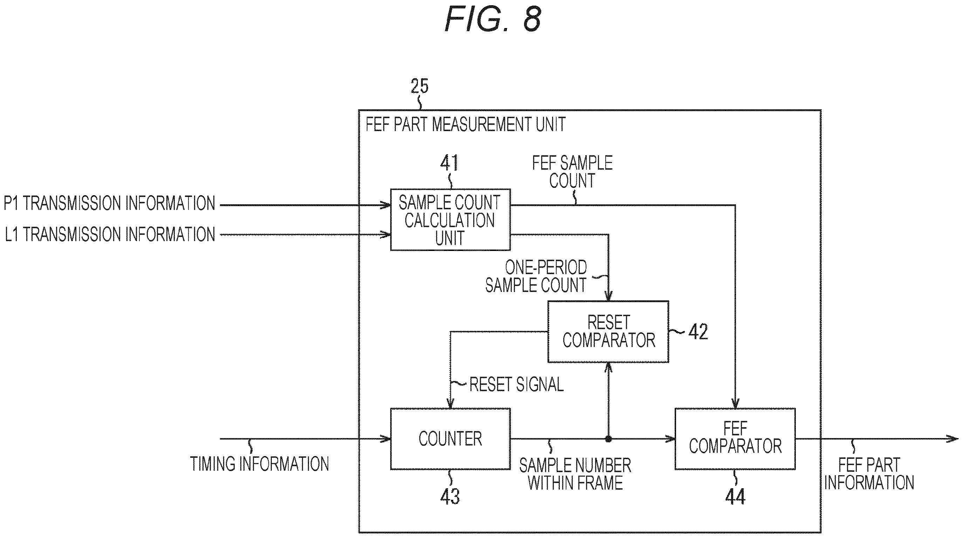

Fig. 8 is a block diagram illustrating an exemplary configuration of the FEF part measurement unit 25.

In the example in Fig. 8, the FEF part measurement unit 25 is configured so as to include a sample count calculation unit 41, a reset comparator 42, a counter 43, and an FEF comparator 44.

For example, the FFT size and the signal indicating whether the FEF is present are input to the sample count calculation unit 41 from the P1 information decoding unit 22 as the P1 transmission information. The number of the data symbols, the guard interval, the signal indicating the FEF interval and the FEF duration are input to the sample count calculation unit 41 from the L1 information decoding unit 23 as the L1 transmission information.

The sample count calculation unit 41 works out the number of samples corresponding to the FEF part (hereinafter, referred to as FEF sample count) and the number of samples corresponding to one period (hereinafter, referred to as one-period sample count) on the basis of the P1 transmission information and the L1 transmission information. The sample count calculation unit 41 supplies the one-period sample count to the reset comparator and supplies the FEF sample count to the FEF comparator 44.

The reset comparator 42 compares a sample number within the frame from the counter 43 with the one-period sample count from the sample count calculation unit 41 and, when both the values match with each other, supplies a reset signal to the counter 43.

The counter 43 starts counting on the basis of the timing information from the OFDM signal demodulator 21 indicating what point serves as the top of the frame. In addition, the counter 43 resets counting in line with the reset signal from the reset comparator 42.

The counter 43 outputs the sample number within the frame representing a count number to the reset comparator 42 and the FEF comparator 44.

The FEF comparator 44 compares the FEF sample count with the number of samples within the frame and, when the number of samples within the frame is equivalent to the FEF sample count, supplies the FEF part information indicating that the current sample is in the FEF part to the module action control unit 26. When the number of samples within the frame is not equivalent to the FEF sample count, the FEF comparator 44 supplies the FEF part information indicating that the current sample is in the T2 frame part to the module action control unit 26.

Once the counter 43 is reset and then, the number of samples within the frame becomes one, the FEF comparator 44 supplies a fact that the current sample is in the T2 frame part to the module action control unit 26 as the FEF part information.

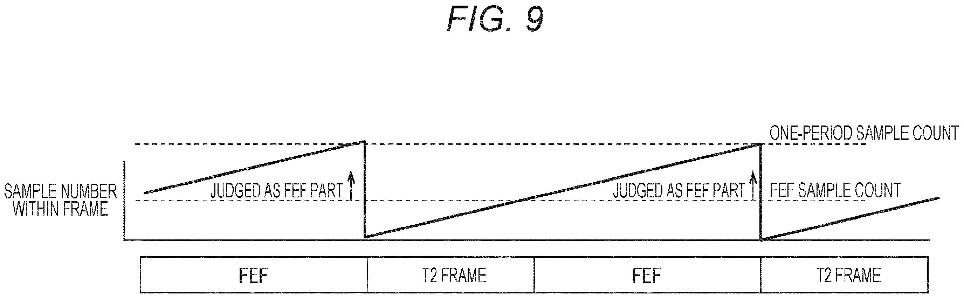

That is, in the example in Fig. 9, an area between a line representing the FEF sample count and a line representing the one-period sample count denotes samples equivalent to the FEF sample count.

As illustrated in Fig. 9, while the sample number within the frame is equivalent to the FEF sample count, the FEF comparator 44 judges that the current sample is in the FEF part and supplies the FEF part information indicating that the current sample is in the FEF part to the module action control unit 26. When the sample number within the frame matches the one-period sample count, the reset comparator 42 determines that this point is the top of the T2 frame and then resets the counter 43. Accordingly, the sample number within the frame becomes zero. As a consequence, the FEF comparator 44 keeps the judgment that the current sample is in the T2 frame part until it is judged again from that time point that the sample number within the frame is equivalent to the FEF sample count and thus supplies the FEF part information indicating that the current sample is in the T2 frame part to the module action control unit 26.

When the FEF part information indicating that the current sample is in the FEF part is given to the module action control unit 26, the module action control unit 26 transfers a signal to turn off control to the respective modules of the intermittent action block. Upon accepting the signal to turn off control, the respective modules of the intermittent action block shift to an OFF (stop) state.

When the FEF part information indicating that the current sample is in the T2 frame part is given to the module action control unit 26, the module action control unit 26 transfers a signal to turn on control to the respective modules of the intermittent action block. Upon accepting the signal to turn on control, the respective modules of the intermittent action block shift to an ON (restart) state.

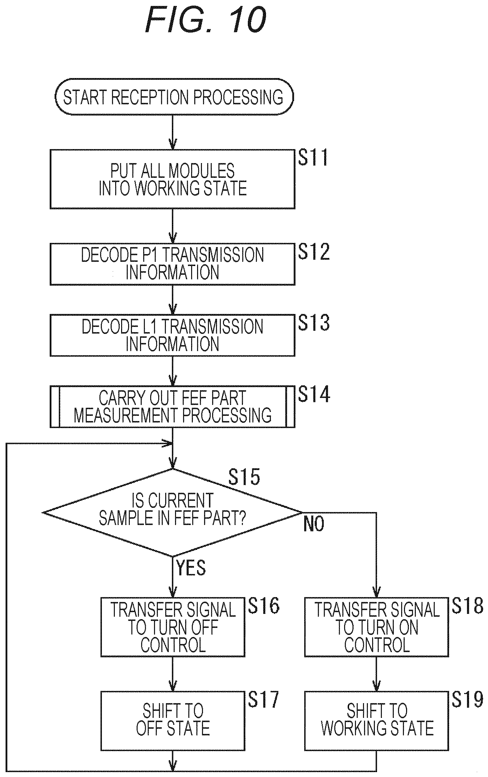

Next, reception processing by the reception device 1 will be described with reference to a flowchart in Fig. 10.

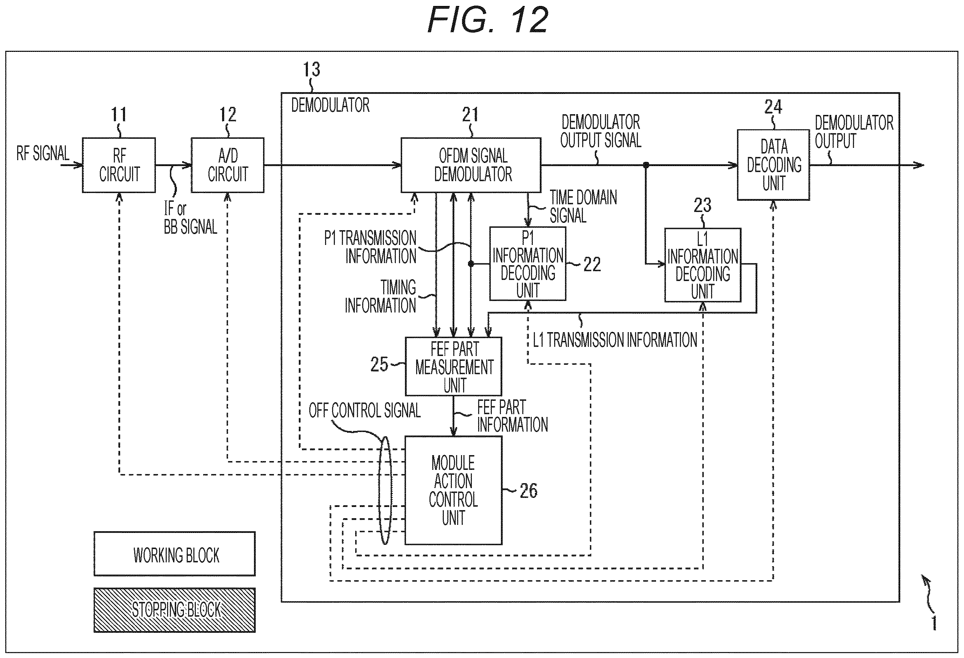

At step S11, the module action control unit 26 puts all the modules (the modules of the constant action block and the modules of the intermittent action block) into a working state as illustrated in Fig. 12. The example in Fig. 12 illustrates that all the modules in the reception device 1 are blocks in the working state (i.e., working blocks).

Specifically, the module action control unit 26 sends the signal to turn on control to all the modules.

All the modules shift to the working state in response to this, while the RF circuit 11 receives the RF signal of the data obtained by the time-division multiplexing of the T2 frame part and the FEF part to carry out predetermined signal processing thereon and then generates, for example, the IF signal. The RF circuit 11 supplies the generated IF signal to the A/D circuit 12.

The A/D circuit 12 converts analog data from the RF circuit 11, namely, the IF signal to digital data and then outputs the converted digital data to the OFDM signal demodulator 21. The OFDM signal demodulator 21 carries out the OFDM demodulation on the digital data to detect the position of P1 from the demodulated data and then supplies the time domain signal of P1 to the P1 information decoding unit 22. In response to this, at step S12, the P1 information decoding unit 22 decodes the time domain signal of P1 from the OFDM signal demodulator 21 to acquire the P1 transmission information. The P1 information decoding unit 22 supplies the acquired P1 transmission information to the OFDM signal demodulator 21 and the FEF part measurement unit 25.

The OFDM signal demodulator 21 detects P2 from the demodulated data and then supplies the demodulator output signal for the position of P2 to the L1 information decoding unit 23. In response to this, at step S13, the L1 information decoding unit 23 decodes the demodulator output signal for the position of P2 from the OFDM signal demodulator 21 to acquire the L1 transmission information. The L1 information decoding unit 23 supplies the acquired L1 transmission information to the OFDM signal demodulator 21 and the FEF part measurement unit 25. This means that the respective modules of the intermittent action block stop working during the FEF part after the P1 information decoding unit 22 and the L1 information decoding unit 23 serving as members thereof acquire the transmission information regarding the FEF part.

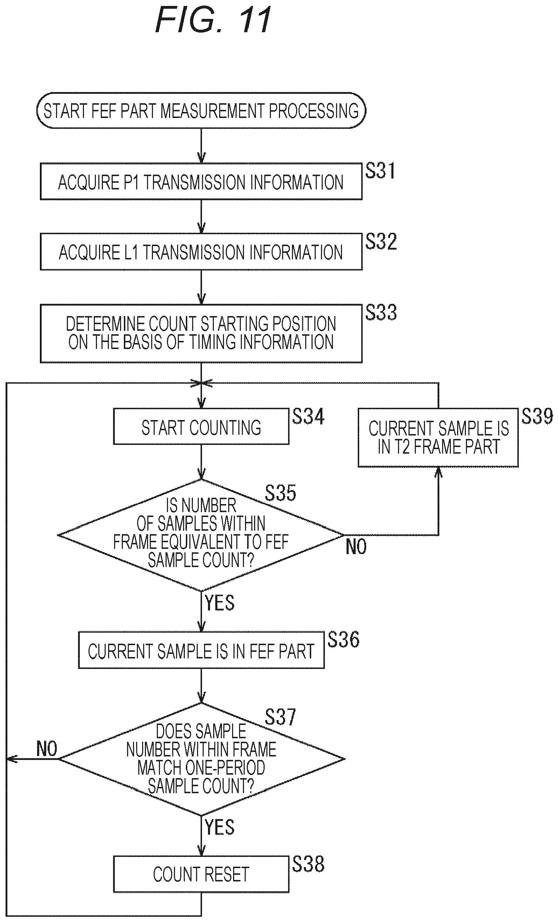

At step S14, the FEF part measurement unit 25 carries out FEF part measurement processing on the basis of the timing information about the frame from the OFDM signal demodulator 21, the P1 transmission information from the P1 information decoding unit 22, and the L1 transmission information from the L1 information decoding unit 23. Details of this FEF part measurement processing will be described later with reference to Fig. 11.

The FEF part information indicating the FEF part or the T2 frame part is supplied to the module action control unit 26 through step S14.

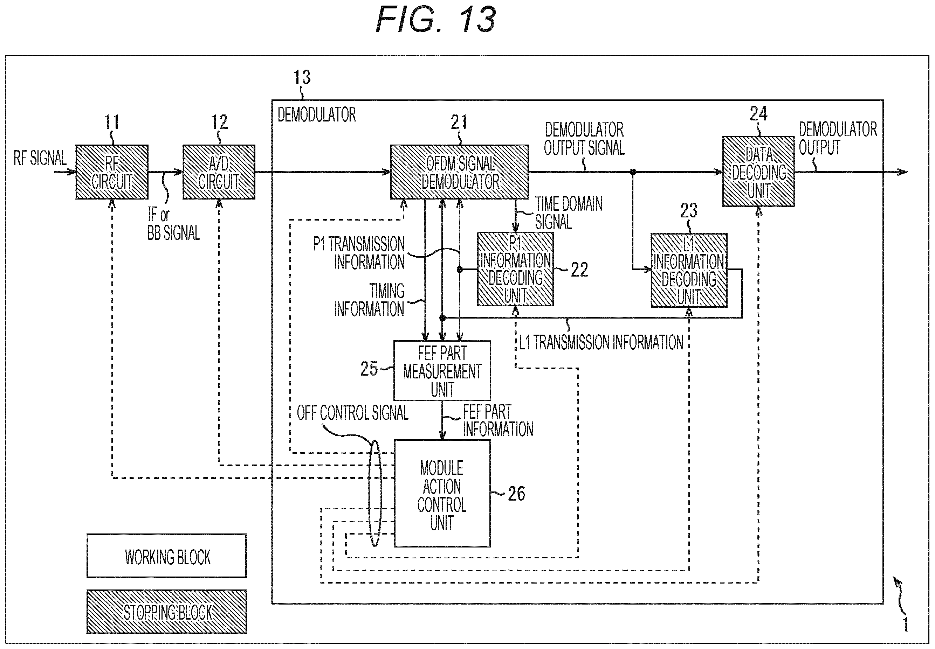

At step S15, the module action control unit 26 judges whether the current sample is in the FEF part. When it is judged at step S15 that the current sample is in the FEF part, the processing proceeds to step S16. At step S16, the module action control unit 26 transfers the signal to turn off control to the respective modules of the intermittent action block. At step S17, the respective modules of the intermittent action block shift to the OFF (stop) state as indicated by stopping blocks (sections with hatching) illustrated with hatching in Fig. 13.

When it is judged at step S15 that the current sample is not in the FEF part, the processing proceeds to step S18. At step S18, the module action control unit 26 transfers the signal to turn on control to the respective modules of the intermittent action block. At step S19, the respective modules of the intermittent action block keep its states at step S11 described above or shift to the ON (working) state (the working blocks in Fig. 12) from the stopping blocks illustrated with hatching in Fig. 13.

Next, FEF part measurement processing at step S14 in Fig. 10 will be described with reference to a flowchart in Fig. 11.

The sample count calculation unit 41 acquires the P1 transmission information at step S31 and then acquires the L1 transmission information at step S32.

After the timing information indicating what point serves as the top of the frame is transferred from the OFDM signal demodulator 21, the counter 43 determines a count starting position at step S33 on the basis of this timing information and then starts counting at step S34. The counter 43 supplies the count number to the reset comparator 42 and the FEF comparator 44 as the sample number within the frame.

At step S35, the FEF comparator 44 compares the FEF sample count with the number of samples within the frame to judge whether the number of samples within the frame is equivalent to the FEF sample count. When it is judged at step S35 that the number of samples within the frame is equivalent to the FEF sample count, the processing proceeds to step S36.

At step S36, the FEF comparator 44 supplies the FEF part information indicating that the current sample is in the FEF part to the module action control unit 26.

At step S37, the reset comparator 42 compares the sample number within the frame from the counter 43 with the one-period sample count from the sample count calculation unit 41 to judge whether the sample number within the frame matches the one-period sample count.

When it is judged at step S37 that the sample number within the frame matches the one-period sample count, the processing proceeds to step S38. At step S38, the counter 43 resets since the reset comparator 42 supplies the reset signal to the counter 43. Following this, the processing returns to step S34 and the processing subsequent thereto is repeated. When it is judged at step S37 that the sample number within the frame does not match the one-period sample count, the processing returns to step S34 and the processing subsequent thereto is repeated.

On the other hand, when it is judged at step S35 that the number of samples within the frame is not equivalent to the FEF sample count, the processing proceeds to step S39. At step S39, the FEF comparator 44 supplies the FEF part information indicating that the current sample is in the T2 frame part to the module action control unit 26. Thereafter, the processing returns to step S34 and the processing subsequent thereto is repeated.

As described thus far, a certain part of the action of the reception device is configured to be turned off during the FEF part, while the certain part of the action of the reception device is turned on solely during the T2 frame part. With this, although the electric power consumption during the T2 frame part does not change, the electric power consumption during the FEF part decreases. Consequently, the electric power consumption can be reduced, compared to a case where the action of the reception device is constantly turned on.

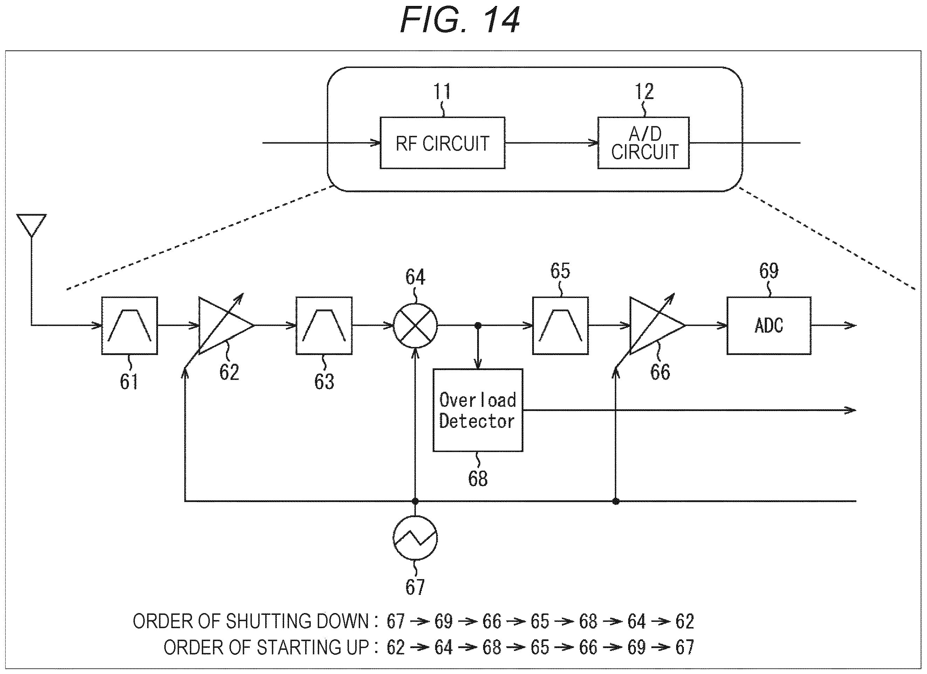

Fig. 14 is a detailed block diagram of the RF circuit and the A/D circuit.

The RF circuit 11 and the A/D circuit 12 are configured so as to include, for example, an RF filter 61, a variable gain RF amplifier 62, an RF filter 63, a mixer 64, a channel selection filter 65, a variable gain IF amplifier 66, a local oscillation circuit 67, an overload detector (distortion detector) 68, and an ADC 69.

A ground-wave digital broadcasting signal received by an antenna (not illustrated) is input to the RF filter 61. The RF filter 61 allows only the ground-wave digital broadcasting signal to pass. The variable gain RF amplifier 62 amplifies the signal that has passed through the RF filter 61 by a gain according to a reception frequency to supply to the RF filter 63.

The RF filter 63 allows only a signal at the reception frequency to pass from among the signals amplified at the variable gain RF amplifier 62 and then supplies the signal that has passed therethrough to the mixer 64. The mixer 64 mixes an output signal from the RF filter 63 with a signal at a local frequency Flo supplied from the local oscillation circuit 67 and then supplies the IF signal obtained as a result thereof to the channel selection filter 65 and the overload detector 68.

The channel selection filter 65 removes a disturbing signal at a frequency adjacent to an intermediate frequency. The variable gain IF amplifier 66 amplifies the IF signal after the removal by a predetermined gain to supply to the ADC 69. The overload detector 68 detects distortion in a transmission path and then outputs a result of the detection to the OFDM signal demodulator 21 at a latter stage. The ADC 69 converts the analog IF signal to digital data and then outputs the converted digital data to the OFDM signal demodulator 21 at a latter stage.

In the RF circuit 11 and the A/D circuit 12 configured as described above, it is desirable that the order of shutting down be as follows: the local oscillation circuit 67, the ADC 69, the variable gain IF amplifier 66, the channel selection filter 65, the overload detector 68, the mixer 64, and the variable gain RF amplifier 62.

Conversely, it is desirable that the order of starting up be as follows: the variable gain RF amplifier 62, the mixer 64, the overload detector 68, the channel selection filter 65, the variable gain IF amplifier 66, the ADC 69, and the local oscillation circuit 67.

The RF circuit 11 and the A/D circuit 12 are stopped and restarted in the orders described above. With this, unnecessary radiation from the antenna can be suppressed.

As described above, in the reception device 1 illustrated in Fig. 7, the RF circuit 11 and the A/D circuit 12 serving as the intermittent action block are stopped during the FEF part and then restarted. At this time, procedures mentioned above in Fig. 14 are used in shutting down and starting up in phases.

<2. Exemplary Compensation Processing according to Present Technology>

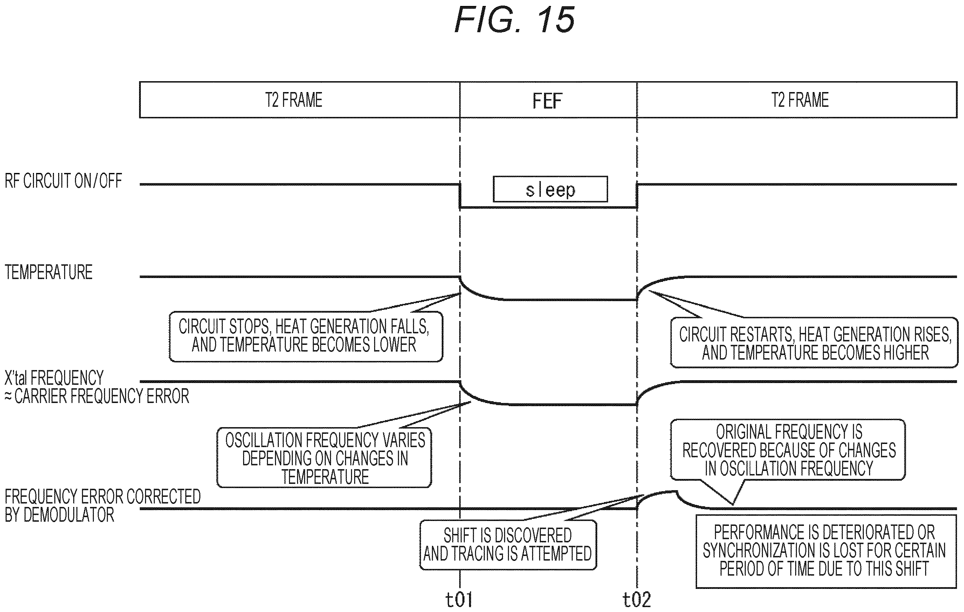

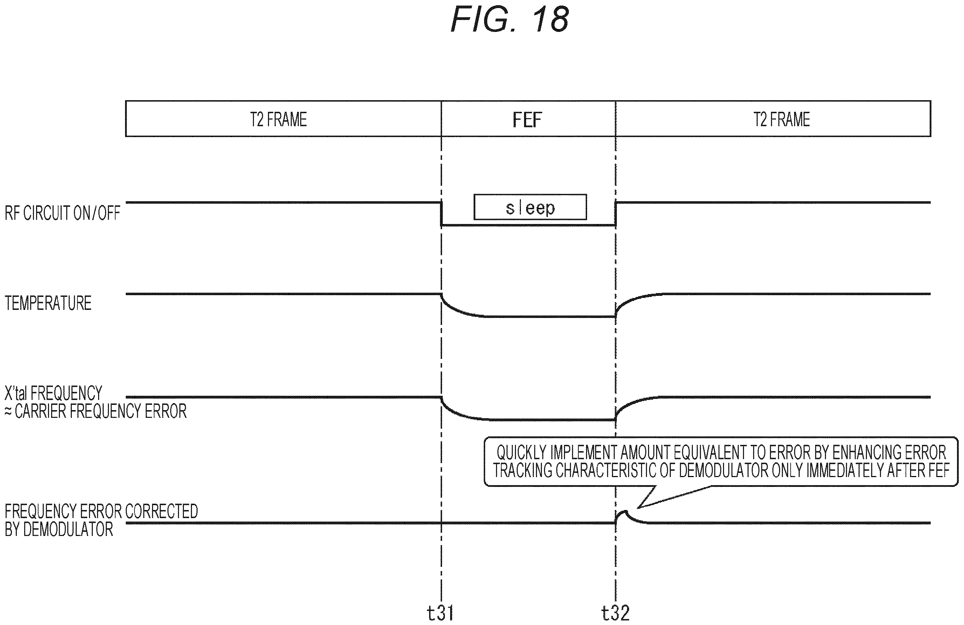

Next, an influence to the reception device 1 due to turning on/off of the RF circuit will be described with reference to Fig. 15 to Fig. 19. Note that the RF circuit in the drawings is assumed to include the A/D circuit.

As illustrated in Fig. 15 at a timing t01 when the FEF part starts, when the RF circuit 11 is stopped (sleep) in the FEF part, the heat generation falls and the temperature of the reception device 1 becomes lower than the temperature during working. Meanwhile, as illustrated at a timing t02 when the FEF part ends, the RF circuit 11 restarts once the T2 frame period starts and accordingly, the heat generation rises, while the temperature of the reception device 1 becomes higher than the temperature during stopping.

As a consequence of this, in regard to a sampling frequency of the local oscillation circuit 67, namely, a crystal (X'tal) frequency, an oscillation frequency varies at the timing t01 and the timing t02 depending on changes in the temperature. Note that "≈ carrier frequency error" indicated in Fig. 15 means that, when the X'tal frequency shifts, a frequency created from the X'tal frequency also shifts and an error thereof, specifically, the carrier frequency error also shifts.

Subsequently, the demodulator 13 (OFDM signal demodulator 21) corrects the carrier frequency error and a down-conversion frequency error at a latter stage of the RF circuit and the A/D circuit. These frequency errors corrected by the demodulator 13 are usually assumed as 0 MHz as illustrated at the timing t01 when the FEF part starts. In this situation, a shift of the oscillation frequency (e.g., 1 MHz) is discovered at the timing t02 when the FEF part ends and tracing this shift is attempted. However, the original frequency is recovered because of changes in the transmission frequency. Nevertheless, the performance is deteriorated or the synchronization is lost for a certain period of time due to the aforementioned shift. In a serious case of a considerable shift, there is a risk of difficulties in receiving the signal.

For a solution to this, the demodulator 13 carries out compensation processing through handling by way of a first method to fourth method described below.

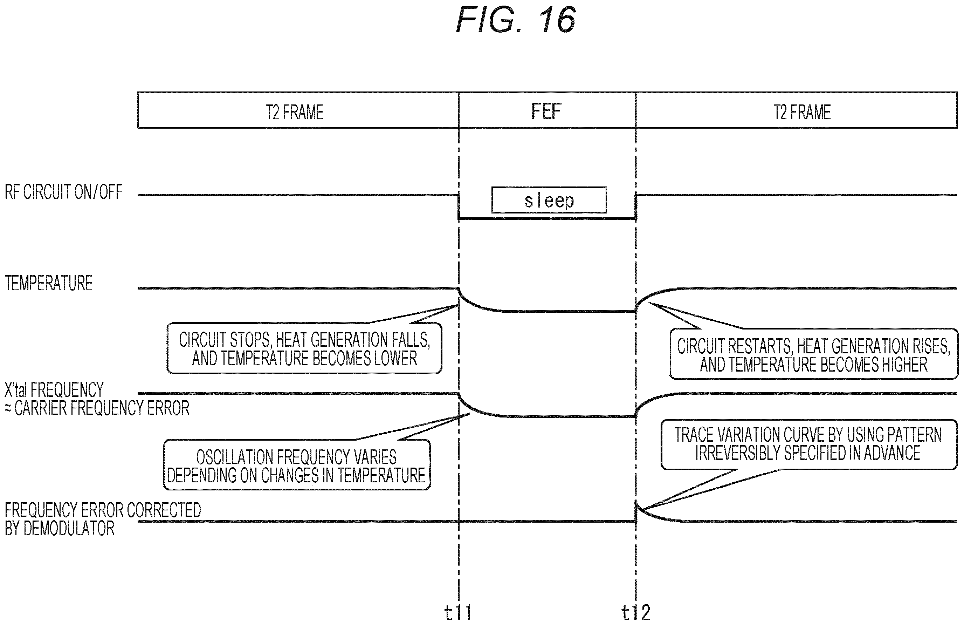

For example, as illustrated in Fig. 16, the first method is configured such that, by assuming that an amount of this shift (e.g., 1 MHz) is known, the demodulator 13 traces a shift of the oscillation frequency (e.g., 1 MHz) at a timing t12 when the FEF part ends, by using a pattern of a variation curve corresponding to the amount of the shift (1 MHz, 0.5 MHz, 0 MHz, or the like) irreversibly specified in advance. As a consequence, the generation of the shift as mentioned above in Fig. 15 can be suppressed.

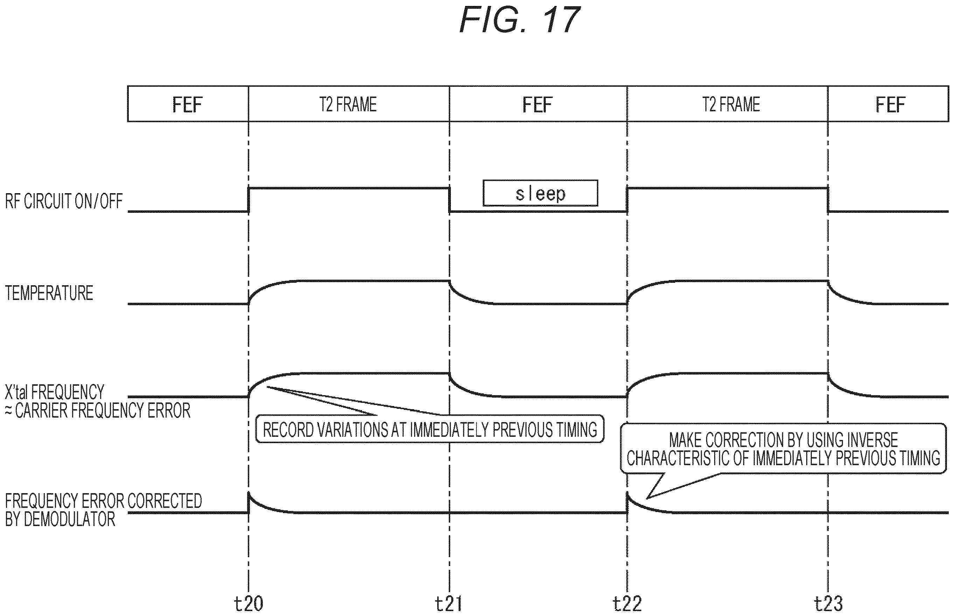

Next, in the second method, although the shift is generated in the frequency error corrected by the demodulator 13 at a timing t20 when an immediately previous FEF part ends, the demodulator 13 records variations (error detection value) in the crystal (X'tal) frequency (≈ carrier frequency error) to keep as illustrated in Fig. 17.

As illustrated at a timing t21 when the FEF part starts, a usual value is assumed as 0 MHz. In this situation, the demodulator 13 corrects the shift of the oscillation frequency (e.g., 1 MHz) at a timing t22 when the FEF part ends, by using an inverse characteristic of the variations (error detection value) recorded at the immediately previous timing t20.

Meanwhile, the frequency error in the demodulator 13 is known to be slightly shifted and also there is a strong possibility of erroneous estimation due to a noise or the like. Accordingly, an amount equivalent to the error is usually configured not to be quickly implemented. In this situation, the third method is configured such that, because the possibility of the shift of the oscillation frequency (e.g., 1 MHz) occurring at a timing t32 when the FEF part ends is known, the demodulator 13 quickly implements an amount equivalent to the error only immediately after that timing, by enhancing an error tracking characteristic. Note that, in this case, there is a risk of the deterioration of performance when the erroneous estimation is caused by a noise.

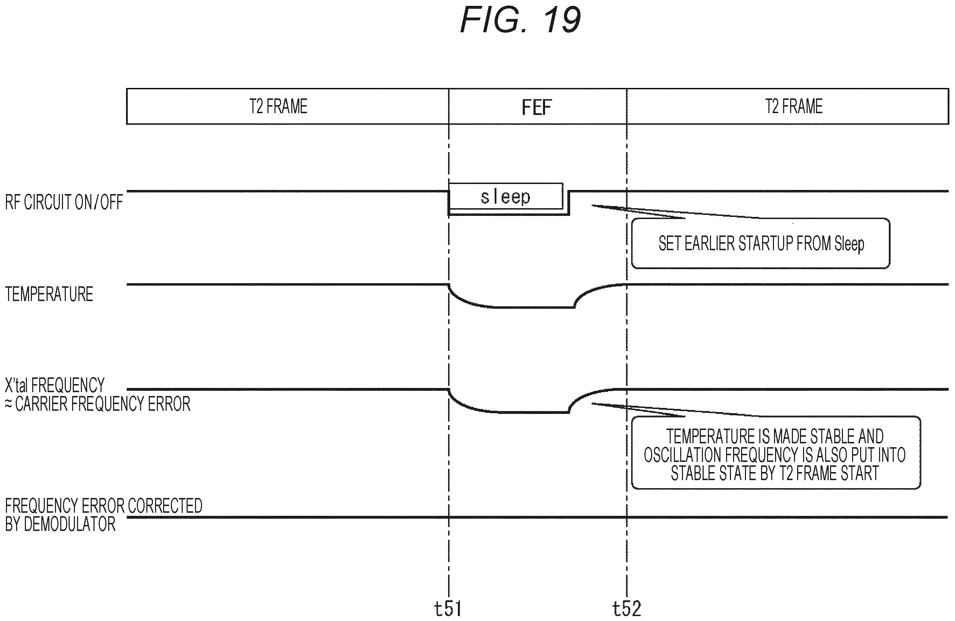

As illustrated in Fig. 19, the fourth method sets the startup of the RF circuit 11 from stopping (Sleep) earlier before a timing t52 when the FEF part ends (that is, sets the startup to a time point prior to a desired action start time by an amount of time required to make the temperature stable). With this setting, changes in temperature to the crystal (X'tal) frequency (≈ carrier frequency error) of the local oscillation circuit 67 is made stable by the timing t52 when the T2 frame starts and the oscillation frequency is also put into a stable state.

As a consequence, the demodulator 13 does not notice the shift at the timing t52 when the FEF part ends and thus can continue the action as it is. This fourth method is the simplest method but a power-off time is shortened.

Additionally, in the example in Fig. 19, it is possible for the module action control unit 26 to control the turning on/off of the RF circuit 11 and so on during the FEF part by using a certain time shift.

As described thus far, in the present technology, the respective modules of the intermittent action block are stopped during the FEF part. As a consequence, the electric power consumption can be suppressed.

Furthermore, in the present technology, the compensation processing for the frequency error is carried out when the analog circuit is stopped. As a consequence, an influence to the circuit due to changes in temperature can be suppressed.

Note that clock gating which holds standby electric power is used when the action is stopped as described above. However, power gating which turns off the main power as well may be used.

In addition, in the above explanation, all of the modules of the intermittent action block have been described as intermittently working. However, at least one of them may be configured to intermittently work. Meanwhile, as described above, the order of the control to stop the intermittent action block can be in accordance with a flow of data but is not restricted thereto. For example, a block having higher electric power consumption may be configured to be stopped earlier.

<3. Exemplary Configuration of Computer>

[Exemplary Computer]

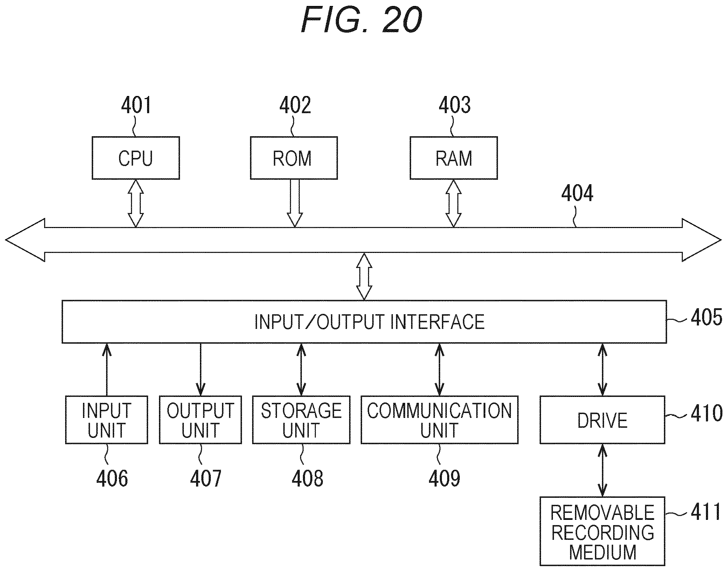

Fig. 20 is a block diagram illustrating an exemplary hardware configuration of a computer that carries out the aforementioned series of the processing using a program.

In the computer, a central processing unit (CPU) 401, a read only memory (ROM) 402, and a random access memory (RAM) 403 are interconnected through a bus 404.

Additionally, an input/output interface 405 is connected to the bus 404. An input unit 406, an output unit 407, a storage unit 408, a communication unit 409, and a drive 410 are connected to the input/output interface 405.

The input unit 406 includes a keyboard, a mouse, and a microphone. The output unit 407 includes a display and a speaker. The storage unit 408 includes a hard disk and a non-volatile memory. The communication unit 409 includes a network interface. The drive 410 drives a removable recording medium 411 such as a magnetic disk, an optical disc, a magneto-optical disk, or a semiconductor memory.

In the computer configured as described above, for example, the aforementioned series of the processing is carried out in such a manner that the CPU 401 loads a program stored in the storage unit 408 to the RAM 403 via the input/output interface 405 and the bus 404 to execute.

For example, the program executed by the computer (CPU 401) can be provided by being recorded in the removable recording medium 411 serving as a package medium or the like. In addition, the program can be provided via a wired or wireless transmission medium such as a local area network, the Internet, or digital broadcasting.

In the computer, the program can be installed to the storage unit 408 via the input/output interface 405 by mounting the removable recording medium 411 in the drive 410. The program can be also installed to the storage unit 408 via a wired or wireless transmission medium when received by the communication unit 409. As an alternative manner, the program can be installed to the ROM 402 or the storage unit 408 in advance.

Note that, the program executed by the computer may be a program in which the processing is carried out along the time series in accordance with the order described in the present description, or alternatively, may be a program in which the processing is carried out in parallel or at a necessary timing, for example, when called.

In addition, the term "system" used in the present description implies an entire device configured by a plurality of devices, blocks, means and so on.

Meanwhile, the embodiments according to the present disclosure are not limited to the aforementioned embodiments and various modifications can be made without departing from the scope of the present disclosure.

Additionally, in the aforementioned cases, a configuration described as one device (or a processing unit) may be divided so as to be configured as a plurality of devices (or processing units). Or conversely, in the aforementioned cases, a configuration described as a plurality of devices (or processing units) may be integrated so as to be configured as one device (or a processing unit). In addition, as a matter of course, a configuration other than those described above may be employed to be added to the configurations of the respective devices (or the respective processing units). Furthermore, a portion of a certain device (or a certain processing unit) may be configured to be included in the configuration of another device (or another processing unit) as long as the configuration or the action of the system as a whole is maintained substantially unchanged. That is, the present technology is not limited to the aforementioned embodiments and various modifications can be made without departing from the scope of the present technology.

REFERENCE SIGNS LIST

# EP 3 214 775 B1

1       Reception device
11      RF circuit
12      A/D circuit
13      Demodulator
21      OFDM signal demodulator
22      P1 information decoding unit
23      L1 information decoding unit
24      Data decoding unit
25      FEF part measurement unit
26      Module action control unit
41      Sample count calculation unit
42      Reset comparator
43      Counter
44      FEF comparator
61      RF filter
62      Variable gain RF amplifier
63      RF filter
64      Mixer
65      Channel selection filter
66      Variable gain IF amplifier
67      Local oscillation circuit
68      Overload detector

## Claims

1.  A reception device (1) comprising:

    an intermittent action block configured to work solely during a T2 frame part when receiving data obtained by time-division multiplexing of the T2 frame part and an FEF, Future Extension Frame, part according to the DVB-T2, Digital Video Broadcasting-Terrestrial 2, standard, which FEF has a structure different from a structure of the T2 frame, wherein the intermittent action block includes an RF circuit (11) and an A/D converter circuit (12); and
    a constant action block configured to constantly monitor the T2 frame part and the FEF frame part and control an action of the intermittent action block,
    **characterized in that**
    the constant action block is configured to carry out control
    of stopping the actions of the RF circuit (11) and the A/D converter circuit (12) in the order of an oscillation circuit (67), an A/D converter (69), a first variable gain amplifier (66), a channel selection filter (65), a distortion detector (68), a mixer (64), and a second variable gain amplifier (62), which constitute the RF circuit (11) and the A/D converter circuit (12), or
    of restarting the actions of the RF circuit (11) and the A/D converter circuit (12) in the order of the second variable gain amplifier (62), the mixer (64), the distortion detector (68), the channel selection filter (65), the first variable gain amplifier (66), the A/D converter (69), and the oscillation circuit (67), which constitute the RF circuit (11) and the A/D converter circuit (12).

2.  The reception device (1) according to claim 1, wherein
    the intermittent action block includes an information acquisition unit (21) configured to acquire transmission information regarding the T2 frame part and the FEF part and work solely during the T2 frame part after the information acquisition unit (21) acquires the transmission information regarding the T2 frame part and the FEF part.

3.  The reception device (1) according to claim 1 or 2, wherein
    the constant action block is configured to carry out control of stopping and restarting the action of the intermittent action block in accordance with a temporal flow of the data.

4.  The reception device (1) according to claim 1, wherein
    the constant action block is configured to stop and restart actions of the RF circuit (11) and the A/D converter circuit (12) in phases.

5. The reception device (1) according to claim 1, further comprising a compensation unit configured to compensate a change in a reception state due to temperature characteristics of the RF circuit (11) and the A/D converter circuit (12) serving as analog circuits when the actions of the RF circuit (11) and the A/D converter circuit (12) are restarted after being stopped, by using signals from the RF circuit (11) and the A/D converter circuit (12).

6. The reception device (1) according to claim 5, wherein
the compensation unit is a demodulator (13) is configured to correct sampling frequency and down-conversion frequency errors due to a change in an oscillation frequency of an oscillation circuit (67) included in the RF circuit (11) and the A/D converter circuit (12).

7. The reception device (1) according to claim 6, wherein the demodulator (13) is configured to:

correct the sampling frequency and down-conversion frequency errors by using a pattern fixedly set, or
record an error detection value for the sampling frequency and down-conversion frequency errors and make a correction on the basis of the error detection value recorded at an immediately previous time.

8. The reception device (1) according to claim 6, wherein
the demodulator (13) is configured to correct the sampling frequency and down-conversion frequency errors by enhancing an error tracking characteristic for a time period until the temperature characteristics become stable.

9. The reception device (1) according to claim 6, wherein
the demodulator (13) is configured to correct the sampling frequency and down-conversion frequency errors by achieving temperature stability earlier in such a manner as to restart the actions of the RF circuit (11) and the A/D converter circuit (12) from a time point prior to a desired action start time thereof by an amount of time required to make the temperature stable.

10. The reception device (1) according to any one of claims 1 to 9, wherein
the constant action block is configured to carry out control of stopping the action of the intermittent action block through clock gating.

11. The reception device (1) according to any one of claims 1 to 10, wherein
the constant action block is configured to carry out control of stopping the action of the intermittent action block through power gating.

12. A reception method, wherein
an intermittent action block of a reception device (1) works solely during a T2 frame part when receiving data obtained by time-division multiplexing of the T2 frame part and a **FEF,** Future Extension Frame,
part according to the DVB-T2 Digital Video Broadcasting-Terrestrial 2, standard, which FEF has a structure different from a structure of the T2 frame, wherein the intermittent action block includes an RF circuit (11) and an A/D converter circuit (12), and
a constant action block of the reception device (1) constantly monitors the T2 frame part and the FEF part and controls an action of the intermittent action block,
**characterized in that**
the constant action block:

stops the actions of the RF circuit (11) and the A/D converter circuit (12) in the order of an oscillation circuit (67), an A/D converter (69), a first variable gain amplifier (66), a channel selection filter (65), a distortion detector (68), a mixer (64), and a second variable gain amplifier (62), which constitute the RF circuit (11) and the A/D converter circuit (12), or
restarts the actions of the RF circuit (11) and the A/D converter circuit (12) in the order of the second variable gain amplifier (62), the mixer (64), the distortion detector (68), the channel selection filter (65), the first variable gain amplifier (66), the A/D converter (69), and the oscillation circuit (67), which constitute the RF circuit (11) and the A/D converter circuit (12).

**Patentansprüche**

1. Empfangsvorrichtung (1), die Folgendes umfasst:

einen Intermittierende-Tätigkeit-Block, der dazu ausgelegt ist, ausschließlich während eines T2-Frame-Teils zu arbeiten, wenn Daten empfangen werden, die durch Zeitmultiplexen des T2-Frame-Teils und eines FEF- bzw. Future-Extension-Frame-Teils gemäß dem DVB-T2-Standard (Digital Video Broadcasting-Terrestrial 2) erhalten werden, wobei der FEF eine von einer Struktur des T2-Frames verschiedene Struktur aufweist, wobei der Intermittierende-Tätigkeit-Block eine HF-Schaltung (11) und eine A/D-Umsetzerschaltung (12) beinhaltet; und

einen Konstante-Tätigkeit-Block, der ausgelegt ist zum konstanten Überwachen des T2-Frame-Teils und des FEF-Frame-Teils und zum Steuern einer Tätigkeit des Intermittierende-Tätigkeit-Blocks, **dadurch gekennzeichnet, dass**

der Konstante-Tätigkeit-Block ausgelegt ist zum Ausführen einer Steuerung

zum Stoppen der Tätigkeiten der HF-Schaltung (11) und der A/D-Umsetzerschaltung (12) in der Reihenfolge einer Oszillationsschaltung (67), eines A/D-Umsetzers (69), eines ersten Verstärkers (66) mit variabler Verstärkung, eines Kanalauswahlfilters (65), eines Verzerrungsdetektors (68), eines Mischers (64) und eines zweiten Verstärkers (62) mit variabler Verstärkung, die die HF-Schaltung (11) und die A/D-Umsetzerschaltung (12) bilden, oder

zum Neustarten der Tätigkeiten der HF-Schaltung (11) und der A/D-Umsetzerschaltung (12) in der Reihenfolge des zweiten Verstärkers (62) mit variabler Verstärkung, des Mischers (64), des Verzerrungsdetektors (68), des Kanalauswahlfilters (65), des ersten Verstärkers (66) mit variabler Verstärkung, des A/D-Umsetzers (69) und der Oszillationsschaltung (67), die die HF-Schaltung (11) und die A/D-Umsetzerschaltung (12) bilden.

2. Empfangsvorrichtung (1) nach Anspruch 1, wobei der Intermittierende-Tätigkeit-Block eine Informationserfassungseinheit (21) beinhaltet, die dazu ausgelegt ist, Übertragungsinformationen bezüglich des T2-Frame-Teils und des FEF-Teils zu erfassen und ausschließlich während des T2-Frame-Teils zu arbeiten, nachdem die Informationserfassungseinheit (21) die Übertragungsinformationen bezüglich des T2-Frame-Teils und des FEF-Teils erfasst.

3. Empfangsvorrichtung (1) nach Anspruch 1 oder 2, wobei
der Konstante-Tätigkeit-Block ausgelegt ist zum Ausführen einer Steuerung zum Stoppen und Neustarten der Tätigkeit des Intermittierende-Tätigkeit-Blocks gemäß einem zeitlichen Fluss der Daten.

4. Empfangsvorrichtung (1) nach Anspruch 1, wobei der Konstante-Tätigkeit-Block ausgelegt ist zum Stoppen und Neustarten von Tätigkeiten der HF-Schaltung (11) und der A/D-Umsetzerschaltung (12) in Phasen.

5. Empfangsvorrichtung (1) nach Anspruch 1, die ferner eine Kompensationseinheit umfasst, die ausgelegt ist zum Kompensieren einer Änderung eines Empfangszustands aufgrund von Temperaturcharakteristiken der HF-Schaltung (11) und der A/D-Umsetzerschaltung (12), die als Analogschaltungen dienen, wenn die Tätigkeiten der HF-Schaltung (11) und der A/D-Umsetzerschaltung (12) neugestartet werden, nachdem sie gestoppt wurden, durch Verwenden von Signalen von der HF-Schaltung (11) und der A/D-Umsetzerschaltung (12).

6. Empfangsvorrichtung (1) nach Anspruch 5, wobei es sich bei der Kompensationseinheit um einen Demodulator (13) handelt, der ausgelegt ist zum Korrigieren von Abtastfrequenz- und Abwärtsumsetzungsfrequenzfehlern aufgrund einer Änderung einer Oszillationsfrequenz einer in der HF-Schaltung (11) und der A/D-Umsetzerschaltung (12) enthaltenen Oszillationsschaltung (67).

7. Empfangsvorrichtung (1) nach Anspruch 6, wobei der Demodulator (13) zu Folgendem ausgelegt ist:

Korrigieren der Abtastfrequenz- und Abwärtsumsetzungsfrequenzfehler durch Verwenden eines fest eingestellten Musters, oder
Aufzeichnen eines Fehlerdetektionswerts für die Abtastfrequenz- und Abwärtsumsetzungsfrequenzfehler und Vornehmen einer Korrektur auf der Basis des zu einer unmittelbar vorhergehenden Zeit aufgezeichneten Fehlerdetektionswerts.

8. Empfangsvorrichtung (1) nach Anspruch 6, wobei der Demodulator (13) ausgelegt ist zum Korrigieren der Abtastfrequenz- und Abwärtsumsetzungsfrequenzfehler durch Erweitern einer Fehlerverfolgungscharakteristik für einen Zeitraum bis die Temperaturcharakteristiken stabil werden.

9. Empfangsvorrichtung (1) nach Anspruch 6, wobei der Demodulator (13) ausgelegt ist zum Korrigieren der Abtastfrequenz- und Abwärtsumsetzungsfrequenzfehler durch früheres Erreichen einer Temperaturstabilität, indem die Tätigkeiten der HF-Schaltung (11) und der A/D-Umsetzerschaltung (12) ab einem Zeitpunkt neugestartet werden, der um eine zum Stabilisieren der Temperatur benötigte Zeitdauer vor einer gewünschten Tätigkeitsstartzeit davon liegt.

**10.** Empfangsvorrichtung (1) nach einem der Ansprüche 1 bis 9, wobei
der Konstante-Tätigkeit-Block ausgelegt ist zum Ausführen einer Steuerung zum Stoppen der Tätigkeit des Intermittierende-Tätigkeit-Blocks durch Clock-Gating.

**11.** Empfangsvorrichtung (1) nach einem der Ansprüche 1 bis 10, wobei
der Konstante-Tätigkeit-Block ausgelegt ist zum Ausführen einer Steuerung zum Stoppen der Tätigkeit des Intermittierende-Tätigkeit-Blocks durch Power-Gating.

**12.** Empfangsverfahren, wobei
ein Intermittierende-Tätigkeit-Block einer Empfangsvorrichtung (1) ausschließlich während eines T2-Frame-Teils arbeitet, wenn Daten empfangen werden, die durch Zeitmultiplexen des T2-Frame-Teils und eines FEF- bzw. Future-Extension-Frame-Teils gemäß dem DVB-T2-Standard (Digital Video Broadcasting-Terrestrial 2) erhalten werden, wobei der FEF eine von einer Struktur des T2-Frames verschiedene Struktur aufweist, wobei der Intermittierende-Tätigkeit-Block eine HF-Schaltung (11) und eine A/D-Umsetzerschaltung (12) beinhaltet, und
ein Konstante-Tätigkeit-Block der Empfangsvorrichtung (1) den T2-Frame-Teil und den FEF-Teil konstant überwacht und eine Tätigkeit des Intermittierende-Tätigkeit-Blocks steuert,
**dadurch gekennzeichnet, dass**
der Konstante-Tätigkeit-Block:

die Tätigkeiten der HF-Schaltung (11) und der A/D-Umsetzerschaltung (12) in der Reihenfolge einer Oszillationsschaltung (67), eines A/D-Umsetzers (69), eines ersten Verstärkers (66) mit variabler Verstärkung, eines Kanalauswahlfilters (65), eines Verzerrungsdetektors (68), eines Mischers (64) und eines zweiten Verstärkers (62) mit variabler Verstärkung, die die HF-Schaltung (11) und die A/D-Umsetzerschaltung (12) bilden, stoppt, oder
die Tätigkeiten der HF-Schaltung (11) und der A/D-Umsetzerschaltung (12) in der Reihenfolge des zweiten Verstärkers (62) mit variabler Verstärkung, des Mischers (64), des Verzerrungsdetektors (68), des Kanalauswahlfilters (65), des ersten Verstärkers (66) mit variabler Verstärkung, des A/D-Umsetzers (69) und der Oszillationsschaltung (67), die die HF-Schaltung (11) und die A/D-Umsetzerschaltung (12) bilden, neustartet.

**Revendications**

**1.** Dispositif de réception comprenant :

un bloc d'action intermittente configuré pour fonctionner uniquement pendant une partie de trame T2 lors de la réception de données obtenues par multiplexage temporel de la partie de trame T2 et une partie FEF, trame d'extension future, selon la norme DVB-T2, de diffusion vidéo terrestre numérique 2, laquelle FEF a une structure différente d'une structure de la trame T2, le bloc d'action intermittente comprenant un circuit RF (11) et un circuit convertisseur A/N (12) ; et
un bloc d'action constante configuré pour surveiller en permanence la partie de trame et la partie de trame de FEF et commander une action du bloc d'action intermittente,
**caractérisé en ce que**
le bloc d'action constante est configuré pour effectuer la commande,
d'arrêt des actions du circuit RF (11) et du circuit convertisseur A/N (12) dans l'ordre d'un circuit d'oscillation (67), d'un convertisseur A/N (69), d'un premier amplificateur à gain variable (66), d'un filtre de sélection de canal (65), d'un détecteur de distorsion (68), d'un mélangeur (64) et d'un second amplificateur à gain variable (62), qui constituent le circuit RF (11) et le circuit convertisseur A/N (12), ou
de redémarrage des actions du circuit RF (11) et du circuit convertisseur A/N (12) dans l'ordre du second amplificateur à gain variable (62), du mélangeur (64), du détecteur de distorsion (68), du filtre de sélection de canal (65), du premier amplificateur à gain variable (66), du convertisseur A/N (69) et du circuit d'oscillation (67), qui constituent le circuit RF (11) et le circuit convertisseur A/N (12).

**2.** Dispositif de réception (1) selon la revendication 1,
le bloc d'action intermittente comprenant une unité d'acquisition d'informations (21) configurée pour acquérir des informations de transmission concernant la partie de trame T2 et la partie de FEF et ne fonctionnant que pendant la partie de trame T2 après que l'unité d'acquisition des informations (21) a acquis les informations de transmission concernant la partie de trame T2 et la partie de FEF.

3. Dispositif de réception (1) selon la revendication 1 ou 2,
le bloc d'action constante étant configuré pour effectuer le commande de l'arrêt et du redémarrage de l'action du bloc d'action intermittente en fonction d'un flux temporel des données.

4. Dispositif de réception (1) selon la revendication 1,
le bloc d'action constante étant configuré pour arrêter et redémarrer les actions du circuit RF (11) et du circuit convertisseur A/N (12) par phases.

5. Dispositif de réception (1) selon la revendication 1, comprenant en outre une unité de compensation configurée pour compenser un changement d'état de réception dû aux caractéristiques de température du circuit RF (11) et du circuit convertisseur A/N (12) servant de circuits analogiques lorsque les actions du circuit RF (11) et du circuit convertisseur A/N (12) sont redémarrées après avoir été arrêtées, en utilisant des signaux du circuit RF (11) et du circuit convertisseur A/N (12).

6. Dispositif de réception (1) selon la revendication 5, l'unité de compensation étant un démodulateur (13), étant configuré pour corriger les erreurs de fréquence d'échantillonnage et de fréquence de conversion vers le bas dues à un changement de la fréquence d'oscillation d'un circuit d'oscillation (67) inclus dans le circuit RF (11) et le circuit convertisseur A/N (12).

7. Dispositif de réception (1) selon la revendication 6, le démodulateur (13) étant configuré pour :

corriger les erreurs de fréquence d'échantillonnage et de fréquence de conversion vers le bas en utilisant un modèle défini de manière fixe, ou
enregistrer une valeur de détection d'erreur pour les erreurs de fréquence d'échantillonnage et de fréquence de conversion vers le bas et effectuer une correction sur la base de la valeur de détection d'erreur enregistrée à un moment immédiatement précédent.

8. Dispositif de réception (1) selon la revendication 6,
le démodulateur (13) étant configuré pour corriger les erreurs de fréquence d'échantillonnage et de fréquence de conversion vers le bas en améliorant une caractéristique de suivi des erreurs pendant une période de temps jusqu'à ce que les caractéristiques de température deviennent stables.

9. Dispositif de réception (1) selon la revendication 6,
le démodulateur (13) étant configuré pour corriger les erreurs de fréquence d'échantillonnage et de fréquence de conversion vers le bas en obtenant la stabilité de la température plus tôt de manière à redémarrer les actions du circuit RF (11) et du circuit de conversion A/N (12) à partir d'un point de temps antérieur à l'heure de début d'action souhaitée de celui-ci d'une durée nécessaire pour rendre la température stable.

10. Dispositif de réception (1) selon l'une quelconque des revendications 1 à 9,
le bloc d'action constante étant configuré pour effectuer la commande de l'arrêt de l'action du bloc d'action intermittente au moyen d'une porte d'horloge.

11. Dispositif de réception (1) selon l'une quelconque des revendications 1 à 10,
le bloc d'action constante étant configuré pour effectuer la commande de l'arrêt de l'action du bloc d'action intermittente au moyen d'une porte de puissance.

12. Procédé de réception,
un bloc d'action intermittente d'un dispositif de réception (1) fonctionnant uniquement pendant une partie de trame T2 lors de la réception de données obtenues par multiplexage temporel de la partie de trame T2 et une partie FEF, trame d'extension future, selon la norme DVB-T2, de diffusion vidéo terrestre numérique 2, laquelle FEF ayant une structure différente d'une structure de la trame T2, le bloc d'action intermittente comprenant un circuit RF (11) et un circuit convertisseur A/N (12), et
un bloc d'action constante de l'appareil de réception (1) surveillant en permanence la partie de trame T2 et la partie FEF et commandant une action du bloc d'action intermittente,
**caractérisé en ce que**

**EP 3 214 775 B1**

le bloc d'action constante :

arrête les actions du circuit RF (11) et du circuit convertisseur A/N (12) dans l'ordre d'un circuit d'oscillation (67), d'un convertisseur A/N (69), d'un premier amplificateur à gain variable (66), d'un filtre de sélection de canal (65), d'un détecteur de distorsion (68), d'un mélangeur (64) et d'un second amplificateur à gain variable (62), qui constituent le circuit RF (11) et le circuit convertisseur A/N (12), ou
redémarre les actions du circuit RF (11) et du circuit convertisseur A/N (12) dans l'ordre du second amplificateur à gain variable (62), du mélangeur (64), du détecteur de distorsion (68), du filtre de sélection de canal (65), du premier amplificateur à gain variable (66), du convertisseur A/N (69) et du circuit d'oscillation (67), qui constituent le circuit RF (11) et le circuit convertisseur A/N (12).

EP 3 214 775 B1

## FIG. 1

| A | | FEF | T2 FRAME | FEF | T2 FRAME |
|---|---|---|---|---|---|

| B | FEF | T2 FRAME | T2 FRAME | FEF | T2 FRAME | T2 FRAME |
|---|---|---|---|---|---|---|

# FIG. 2

| T2 frame |
|---|

| P1 | P2 | Data symbols |
|---|---|---|

| P1 signalling | L1-pre signalling | L1-post signalling |
|---|---|---|

SIGNAL INDICATING
WHETHER FEF IS
PRESENT
FFT SIZE

NUMBER OF DATA
SYMBOLS
GUARD INTERVAL

| Configurable | Dynamic | Extension | CRC | |
|---|---|---|---|---|

FEF INTERVAL
FEF DURATION

L1
padding

EP 3 214 775 B1

## FIG. 3

## FIG. 4

| FEF | T2 FRAME | FEF | T2 FRAME |
|-----|----------|-----|----------|

| ACTION OF RECEIVER | ON |
|--------------------|-----|

| POWER CONSUMPTION | HIGH |
|-------------------|------|

| ACTION OF RECEIVER | OEF | ON | OEF | ON |
|--------------------|-----|-----|-----|-----|

| POWER CONSUMPTION | LOW | HIGH | LOW | HIGH |
|-------------------|-----|------|-----|------|

EP 3 214 775 B1

## FIG. 5

EP 3 214 775 B1

# FIG. 6

CONSTANT ACTION BLOCK

INTERMITTENT ACTION BLOCK

*FIG. 7*

DEMODULATOR OUTPUT

DEMODULATOR

13 DEMODULATOR

RF SIGNAL

11 RF CIRCUIT

IF or BB SIGNAL

12 A/D CIRCUIT

21 OFDM SIGNAL DEMODULATOR

DEMODULATOR OUTPUT SIGNAL

TIME DOMAIN SIGNAL

22 P1 INFORMATION DECODING UNIT

23 L1 INFORMATION DECODING UNIT

24 DATA DECODING UNIT

L1 TRANSMISSION INFORMATION

P1 TRANSMISSION INFORMATION

TIMING INFORMATION

25 FEF PART MEASUREMENT UNIT

FEF PART INFORMATION

26 MODULE ACTION CONTROL UNIT

ON/OFF CONTROL SIGNAL

CONSTANT ACTION BLOCK

INTERMITTENT ACTION BLOCK

## FIG. 8

## FIG. 9

ONE-PERIOD SAMPLE COUNT

SAMPLE NUMBER WITHIN FRAME

JUDGED AS FEF PART | JUDGED AS FEF PART | FEF SAMPLE COUNT

| FEF | T2 FRAME | FEF | T2 FRAME |

# FIG. 10

START RECEPTION PROCESSING

PUT ALL MODULES INTO WORKING STATE — S11

DECODE P1 TRANSMISSION INFORMATION — S12

DECODE L1 TRANSMISSION INFORMATION — S13

CARRY OUT FEF PART MEASUREMENT PROCESSING — S14

S15
IS CURRENT SAMPLE IN FEF PART?

NO

YES

TRANSFER SIGNAL TO TURN OFF CONTROL — S16

TRANSFER SIGNAL TO TURN ON CONTROL — S18

SHIFT TO OFF STATE — S17

SHIFT TO WORKING STATE — S19

# FIG. 11

```
( START FEF PART MEASUREMENT PROCESSING )
                    |
                    v
   ACQUIRE P1 TRANSMISSION INFORMATION      S31
                    |
                    v
   ACQUIRE L1 TRANSMISSION INFORMATION      S32
                    |
                    v
   DETERMINE COUNT STARTING POSITION        S33
   ON THE BASIS OF TIMING INFORMATION
                    |
                    v
          START COUNTING    S34        CURRENT SAMPLE IS    S39
                    |                  IN T2 FRAME PART
                    v                         ^
               IS NUMBER      S35             |
            OF SAMPLES WITHIN                 |
         FRAME EQUIVALENT TO FEF -----NO------+
            SAMPLE COUNT?
                    |
                   YES
                    |
                    v
   CURRENT SAMPLE IS IN FEF PART    S36
                    |
                    v
             DOES SAMPLE      S37
          NUMBER WITHIN FRAME
   NO-----MATCH ONE-PERIOD
           SAMPLE COUNT?
                    |
                   YES
                    |
                    v
          COUNT RESET    S38
```

27

## FIG. 12

EP 3 214 775 B1

# FIG. 13

EP 3 214 775 B1

# FIG. 14

ORDER OF SHUTTING DOWN : 67 → 69 → 66 → 65 → 68 → 64 → 62
ORDER OF STARTING UP : 62 → 64 → 68 → 65 → 66 → 69 → 67

EP 3 214 775 B1

# FIG. 15

| T2 FRAME | FEF | T2 FRAME |
|---|---|---|

RF CIRCUIT ON/OFF — sleep

TEMPERATURE

> CIRCUIT STOPS, HEAT GENERATION FALLS, AND TEMPERATURE BECOMES LOWER

> CIRCUIT RESTARTS, HEAT GENERATION RISES, AND TEMPERATURE BECOMES HIGHER

X'tal FREQUENCY ≈ CARRIER FREQUENCY ERROR

> OSCILLATION FREQUENCY VARIES DEPENDING ON CHANGES IN TEMPERATURE

> ORIGINAL FREQUENCY IS RECOVERED BECAUSE OF CHANGES IN OSCILLATION FREQUENCY

FREQUENCY ERROR CORRECTED BY DEMODULATOR

> SHIFT IS DISCOVERED AND TRACING IS ATTEMPTED

> PERFORMANCE IS DETERIORATED OR SYNCHRONIZATION IS LOST FOR CERTAIN PERIOD OF TIME DUE TO THIS SHIFT

t01          t02

*FIG. 16*

| T2 FRAME | FEF | T2 FRAME |

RF CIRCUIT ON/OFF — sleep

TEMPERATURE

CIRCUIT STOPS, HEAT GENERATION FALLS, AND TEMPERATURE BECOMES LOWER

CIRCUIT RESTARTS, HEAT GENERATION RISES, AND TEMPERATURE BECOMES HIGHER

X'tal FREQUENCY ≈ CARRIER FREQUENCY ERROR

OSCILLATION FREQUENCY VARIES DEPENDING ON CHANGES IN TEMPERATURE

TRACE VARIATION CURVE BY USING PATTERN IRREVERSIBLY SPECIFIED IN ADVANCE

FREQUENCY ERROR CORRECTED BY DEMODULATOR

t11    t12

EP 3 214 775 B1

# FIG. 17

| FEF | T2 FRAME | FEF | T2 FRAME | FEF |
|-----|----------|-----|----------|-----|

RF CIRCUIT ON/OFF

sleep

TEMPERATURE

X'tal FREQUENCY ≈ CARRIER FREQUENCY ERROR

RECORD VARIATIONS AT IMMEDIATELY PREVIOUS TIMING

MAKE CORRECTION BY USING INVERSE CHARACTERISTIC OF IMMEDIATELY PREVIOUS TIMING

FREQUENCY ERROR CORRECTED BY DEMODULATOR

t20     t21     t22     t23

EP 3 214 775 B1

# FIG. 18

| T2 FRAME | FEF | T2 FRAME |
|---|---|---|

RF CIRCUIT ON/OFF

sleep

TEMPERATURE

X'tal FREQUENCY
≈ CARRIER FREQUENCY ERROR

QUICKLY IMPLEMENT AMOUNT EQUIVALENT TO ERROR BY ENHANCING ERROR TRACKING CHARACTERISTIC OF DEMODULATOR ONLY IMMEDIATELY AFTER FEF

FREQUENCY ERROR CORRECTED
BY DEMODULATOR

t31      t32

EP 3 214 775 B1

## FIG. 19

| T2 FRAME | FEF | T2 FRAME |
|---|---|---|

RF CIRCUIT ON/OFF    [ sleep ]

SET EARLIER STARTUP FROM Sleep

TEMPERATURE

X'tal FREQUENCY
≈ CARRIER FREQUENCY ERROR

TEMPERATURE IS MADE STABLE AND
OSCILLATION FREQUENCY IS ALSO PUT INTO
STABLE STATE BY T2 FRAME START

FREQUENCY ERROR CORRECTED
BY DEMODULATOR

t51          t52

EP 3 214 775 B1

# FIG. 20

401 CPU

402 ROM

403 RAM

404

405 INPUT/OUTPUT INTERFACE

INPUT UNIT 406

OUTPUT UNIT 407

STORAGE UNIT 408

COMMUNICATION UNIT 409

DRIVE 410

REMOVABLE RECORDING MEDIUM 411

EP 3 214 775 B1

## REFERENCES CITED IN THE DESCRIPTION

**Patent documents cited in the description**

- EP 2285057 A1

**Non-patent literature cited in the description**

- Frame structure channel coding and modulation for a second generation digital terrestrial television broadcasting system (DVB-T2). *ETSI EN 302 755 V1.3.1,* 2012, URL: http://www.dvb.org/technology/standards/dvb-t2